# EUROPÄISCHE PATENTSCHRIFT

(11) **EP 3 281 893 B1**
(45) Veröffentlichungstag und Bekanntmachung des Hinweises auf die Patenterteilung: **30.01.2019**
(21) Anmeldenummer: 16183937.8
(22) Anmeldetag: 12.08.2016
(51) Int. Cl.: B65G 47/91, B25J 15/06, B66C 1/02

(54) **MEHRFACHSAUGGREIFER**
MULTIPLE SUCTION GRIPPER
PONT A VENTOUSES MULTIPLES

(43) Veröffentlichungstag der Anmeldung: 14.02.2018
(73) Patentinhaber: MULTIVAC Sepp Haggenmüller SE & Co. KG, 87787 Wolfertschwenden (DE)
(72) Erfinder: RIED, Andreas, 6600 Reutte (AT)
(74) Vertreter: Grünecker Patent- und Rechtsanwälte PartG mbB

(56) Entgegenhaltungen:
- EP-A1- 1 264 788
- DE-A1- 19 544 490
- DE-U1- 29 609 486
- US-A- 6 149 375
- US-A1- 2014 119 875

## Beschreibung

Die Erfindung bezieht sich auf einen Mehrfachsauggreifer gemäß dem Oberbegriff des Anspruchs 1. Weiterhin bezieht sich die vorliegende Erfindung auf ein Verfahren gemäß dem Anspruch 12.

Aus der EP 2 105 393 A1, EP 1 775 243 A2 und DE 10 2004 011 876 A1 sind Mehrfachsauggreifer zum Ansaugen von Produkten mittels Vakuum. Einzelne Sauggreifer werden über Ventile zu- und abgeschaltet. Es können auch einzelne Vakuumsauger pneumatisch angehoben und abgesenkt werden, um die Produkte gezielt erfassen zu können. Aus der US 2014/0119875 geht ein Mehrfachsauggreifer nach dem Oberbegriff des Anspruchs 1 und ein Verfahren zum Betrieb eines Mehrfachsauggreifers hervor, der eine Greiferplatte und wenigstens zwei mittels eines Pneumatikzylinders relativ zu der Greiferplatte bewegbaren Sauggreifern aufweist. Nachteilig an Vakuumsaugern ist der Einsatz zum Greifen von unregelmäßig geformten, beispielsweise welligen Produkten wie vorgebratenen Baconscheiben.

Aufgabe der vorliegenden Erfindung ist es, einen vereinfachten Mehrfachsauger, der auch zum Umsetzen von Lebensmitteln mit unregelmäßiger Form geeignet ist, bereitzustellen. Diese Aufgabe wird gelöst durch einen Mehrfachsauggreifer mit den Merkmalen des Anspruchs 1 bzw. durch ein Verfahren gemäß dem Anspruch 12. Unter einem Mehrfachsauggreifer wird dabei ein Greifer mit mehreren Sauggreifern verstanden. Vorteilhafte Weiterbildungen der Erfindung sind in den Unteransprüchen angegeben.

Die Erfindung bezieht sich auf einen Mehrfachsauggreifer mit einer Greiferplatte und wenigstens zwei Sauggreifern, wobei die Sauggreifer jeweils ein Gehäuse umfassen, die mittels eines Pneumatikzylinders relativ zueinander und, insbesondere orthogonal, zur Greiferplatte bewegbar sind. Es ist wenigstens eine Führungsstange an der Greiferplatte vorgesehen, über die die Sauggreifer jeweils geführt sind, wobei die Sauggreifer an einer zum Aufnehmen eines Produktes vorgesehenen Ansaugseite eine Vielzahl von Öffnungen aufweisen. Der Mehrfachsauggreifer zeichnet sich dadurch aus, dass die Sauggreifer jeweils einen Sauganschluss aufweisen, der mittelbar mit einem Unterdruckerzeuger verbunden ist, und dass die Sauggreifer jeweils einen Sperrschieber umfassen, wobei der Sperrschieber derart an der Führungsstange vorgesehen ist, dass eine Bewegung des Saugreifers gegenüber der Greiferplatte zu einer Veränderung einer Öffnungsfläche des Sauganschlusses führt. So können Ventile entfallen, die einen Unterdruckerzeuger an den jeweiligen Sauggreifern zu- und abschalten und mit der Bewegung der Sauggreifer zwischen einer Ruhestellung und einer Greifstellung abgestimmt sein müssen. Die Erfindung vereinfacht die Ausführung eines Mehrsauggreifers. Der Sauggreifer kann auch verdrehgesichert geführt sein.

Vorzugsweise ist an der Ansaugseite jedes Gehäuses eine Wechselplatte vorgesehen, um beim Reinigen des Mehrfachsauggreifers auch das Innere eines jeden Sauggreifers einfach und schnell zugänglich machen zu können.

In einer besonders vorteilhaften Ausführung ist die Führungsstange zumindest abschnittsweise durch die Wechselplatte hindurch bewegbar und unterstützt ein Ablegen des gegriffenen oder aufgenommenen Produkts ohne eine weitere Aktorik.

Vornehmlich ist die Wechselplatte werkzeuglos am Gehäuse montierbar und demontierbar (wechselbar). Dabei ist die Wechselplatte bevorzugt entlang von Führungsnuten in dem Gehäuse des Saugreifers verschiebbar.

Gemäß einer Variante ist wenigstens ein Abdrückelement zum Abdrücken eines Produktes vom Sauggreifer weg vorgesehen, um diesen Vorgang beispielsweise bei klebrigen Produkten möglichst prozesssicher zu gestalten.

Die Öffnungsfläche ist bevorzugt mittels des Sperrschiebers in dessen geschlossener Stellung teilweise abgedeckt, vorzugsweise sind dabei mehr als 80% der Öffnungsfläche bedeckt, um beispielsweise einen als Unterdruckerzeuger eingesetzten Ringkanalverdichter nicht gegen eine geschlossene Leitung arbeiten lassen zu müssen und somit nicht unnötig zu belasten.

Vorzugsweise weist der Mehrfachsauggreifer, beziehungsweise jeder einzelne Sauggreifer eine Leckagebohrung auf, um ein Nachströmen von etwas Fehlluft zu erleichtern.

Vornehmlich weisen die Sauggreifer einen gegenüber der Greiferplatte in ihrer Greifstellung und/oder Ruhestellung jeweils unterschiedlichen Abstand auf, vorzugsweise einen treppenförmigen Abstand, um beim Aufnehmen eines neuen Produkts jeweils nur den zum Aufnehmen aktivierten Sauggreifer von den anderen Sauggreifern in Richtung Produkt hervorstehen zu lassen. So behindern die anderen Sauggreifer nicht den Aufnahmevorgang, da sie einen Abstand zu anderen auf beispielsweise einem Zuführband liegenden Produkten aufweisen.

Ein erfindungsgemäßer Mehrfachsauggreifer ist vorzugsweise mit drei Sauggreifern ausgeführt, um einen guten Kompromiss zwischen der Saugleistung des Unterdruckerzeugers, der bewegten Masse der Mehrfachsauggreifers selbst und gegebenenfalls der Pickleistung eines den Mehrfachsauggreifer tragenden Deltaroboters zu erreichen.

Die Erfindung betrifft auch ein Verfahren zum Betrieb eines Mehrfachsauggreifers mit einer Greiferplatte und mit wenigstens zwei Sauggreifern, die relativ zueinander und, insbesondere orthogonal, zur Greiferplatte mittels eines Pneumatikzylinders bewegt werden. Das Verfahren zeichnet sich dadurch aus, dass ein Sperrschieber jeweils eines Sauggreifers eine Öffnungsfläche eines Sauganschlusses bei der Bewegung des Sauggreifers verändert. So kann auf Ventile und deren Ansteuerung für die Ab- und Zuschaltung des Unterdruckerzeugers verzichtet werden.

Dabei wird bevorzugt ein Produkt mittels wenigstens eines Abdrückelements und/oder wenigstens einer Führungsstange des Sauggreifers zum Ablegen des Produkts von der Wechselplatte weggedrückt, während das Gehäuse an die Greiferplatte heranbewegt wird. Dies führt zu einem verbesserten Abdrücken des zuvor aufgenommenen Produkts, welches ansonsten durch seine beispielsweise klebrige Oberfläche an dem Sauggreifer haften bleiben könnte.

Im Folgenden wird ein vorteilhaftes Ausführungsbeispiel der Erfindung anhand einer Zeichnung näher erläutert. Im Einzelnen zeigen:
- Fig. 1: einen Deltaroboter mit einer Greifvorrichtung in Form eines Mehrfachsauggreifers,
- Fig. 2: einen Mehrfachsauggreifer,
- Fig. 3: eine Schnittansicht eines Saugreifers in Greifstellung,
- Fig. 4: eine Schnittansicht eines Saugreifers in Ruhestellung,
- Fig. 5: einen Saugreifers beim Aufnahmen eines ersten Produkts,
- Fig. 6: einen Mehrfachsaugreifer beim Aufnahmen eines zweiten Produkts,
- Fig. 7: einen Mehrfachsaugreifer beim Aufnahmen eines dritten Produkts und
- Fig. 8: einen Mehrfachsaugreifer nach dem Ablegen der Produkte.

Gleiche Komponenten sind in den Figuren durchgängig mit gleichen Bezugszeichen versehen.

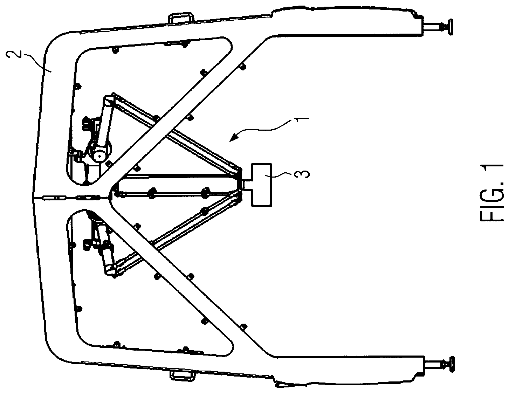

Figur 1 zeigt einen Deltaroboter 1, der in einem Gestell 2 integriert ist und einen schematisch dargestellten Mehrfachsauggreifer 3 an seinem bewegbaren unteren Ende umfasst. Eine solche Einheit kann an einer Verpackungsmaschine zum Umsetzen von Produkten oder Packungen vorgesehen sein.

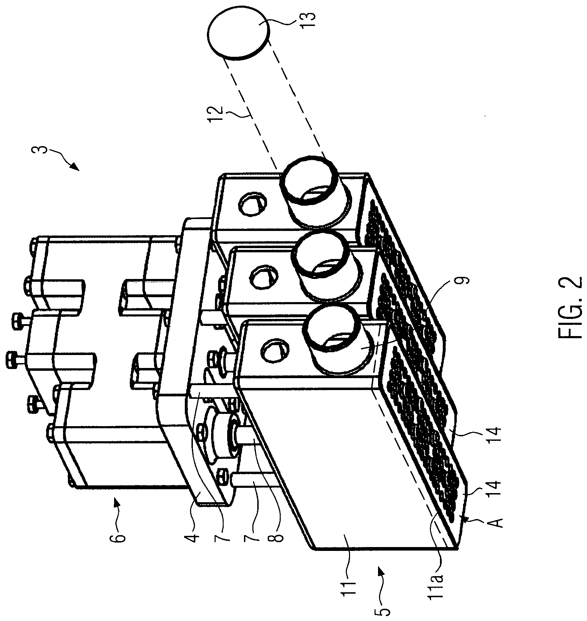

Figur 2 zeigt den Mehrfachsauggreifer 3 in einer detaillierten isometrischen Ansicht. Der Mehrfachsauggreifer 3 umfasst eine Greiferplatte 4, über die der Mehrfachsauggreifer 3 an dem Deltaroboter 1 anbringbar ist. Der Mehrfachsauggreifer 3 weist drei Sauggreifer 5 auf, die parallel zueinander angeordnet sind und orthogonal zur Greiferplatte 4 individuell mittels jeweils eines zugeordneten Pneumatikzylinders 6 zwischen einer Ruhestellung und einer Greifstellung bewegbar sind. Dabei sind die Pneumatikzylinder 6 oberhalb der Greiferplatte 4 und die Saugreifer 5 unterhalb der Greiferplatte 4 vorgesehen. An der Greiferplatte 4 sind jeweils zwei Führungsstangen 7 je Sauggreifer 5 vorgesehen. Die Bewegung der Sauggreifer 5 erfolgt über eine Kolbenstange 8 des Pneumatikzylinders 6. Benachbart zu einer Ansaugseite A eines Gehäuses 11 jedes Sauggreifers 5 ist eine Anschlussöffnung 9 vorgesehen, an der mittels jeweils einer Leitung 12 ein Unterdruckerzeuger 13 angeschlossen ist. Dabei ist der Unterdruckerzeuger 13 vorzugsweise ein Seitenkanalverdichter, um hohe Luftströme erzeugen zu können.

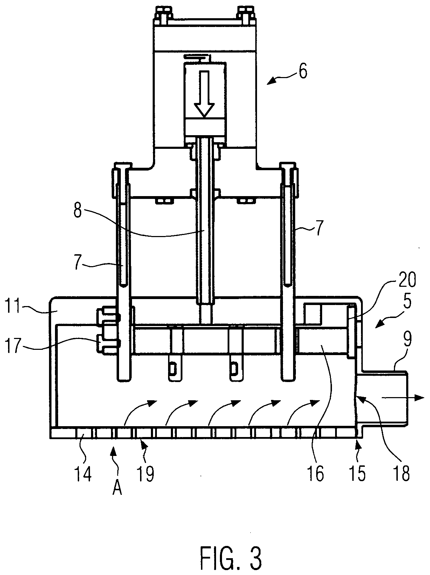

Figur 3 zeigt eine Schnittansicht eines Saugreifers 5 in Greifstellung. Greifstellung bedeutet, dass sich der Sauggreifer 5 in der Position zum Greifen oder Aufnehmen sowie Halten und Transportieren eines Produkts befindet. Dies ist der Fall, wenn der Pneumatikzylinder 6 seine Kolbenstange 8, deren Ende mit dem Gehäuse 11 verbunden ist, ausgefahren hat und somit der Sauggreifer 5 seine unterste und von der Greiferplatte 4 entfernteste Stellung einnimmt. Dabei stehen die Führungsstangen 7 nicht über eine Wechselplatte 14 an der Ansaugseite A des Sauggreifers 5 nach außen vor. Die Wechselplatte 14 ist beispielsweise zu Reinigungszwecken in der Zeichnung werkzeuglos nach links verschiebbar. Dabei sind innen in dem Gehäuse 11 Nuten 11a vorgesehen (siehe Figur 2), in denen die Wechselplatte 14 seitlich verschiebbar ist. Über eine Rastvorrichtung 15 ist die Wechselplatte 14 während des Betriebs sicher in ihrer vorgesehenen Position gehalten.

In dieser Schnittansicht ist ein Sperrschieber 16 dargestellt, der über Klemmschrauben 17 an der zeichnerisch linken Führungsstange 7 befestigt ist. Über die zeichnerisch rechte Führungsstange 7 ist die Lage des Sperrschiebers 16 im Sauggreifer 5 bestimmt. Der Sperrschieber 16 ist innerhalb des Sauggreifers 5 und damit relativ zum Gehäuse 11 bewegbar. In der dargestellten Greifstellung ist eine Öffnungsfläche 18 der Anschlussöffnung 9 an der Innenseite des Gehäuses 11 unbedeckt und somit komplett offen, um zum Ansaugen einen maximalen Luftstrom, der mit Pfeilen dargestellt ist, zu ermöglichen. Die Wechselplatte 14 weist eine Vielzahl von Öffnungen 19 mit jeweils einer Querschnittsfläche von 2 bis 10 mm2 auf, um ein Produkt großflächig halten zu können.

Der Sperrschieber 16 weist an seiner der Öffnungsfläche 18 zugewandten Seite eine Sperrfläche 20 auf, die annähernd der Öffnungsfläche 18 entspricht.

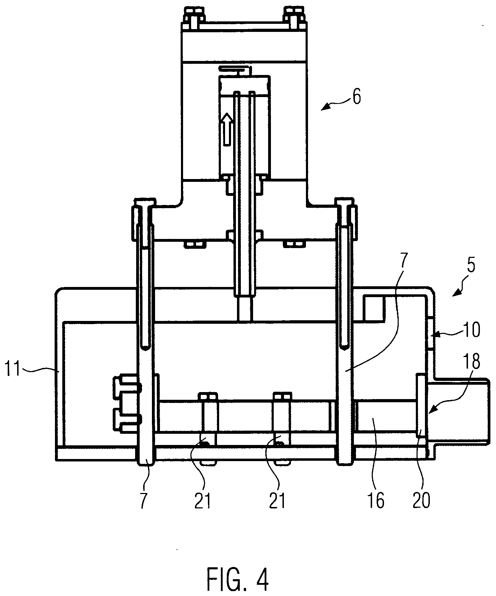

Figur 4 zeigt den Sauggreifer 5 in einer Ruhestellung, die auch der Stellung nach dem Ablegen eines Produkts entspricht. Der Pneumatikzylinder 6 hat das Gehäuse 11 in die oberste Endlage angehoben. Dabei befindet die Sperrfläche 20 des Sperrschiebers 16 derart an der Öffnungsfläche 18, dass die Öffnungsfläche 18 größtenteils abgedeckt ist. Es ist nicht notwendig, die Öffnungsfläche 18 komplett abzudichten, da dies im Falle aller drei Sauggreifer 5 in dieser Ruhestellung den Unterdruckerzeuger 13 unnötig belasten würde. Am Sperrschieber 16 sind zwei Abdrückelemente 21 vorgesehen, um ein Abdrücken des angesaugten Produkts durch die Führungsstangen 7 zu unterstützen, indem die unteren Enden der Abdrückelemente 21 nach unten über die Wechselplatte 14 hinaus vorstehen.

Figur 4 zeigt eine optionale Leckagebohrung 10, falls die teilweise abgedeckte Öffnungsfläche 18 nicht ausreicht.

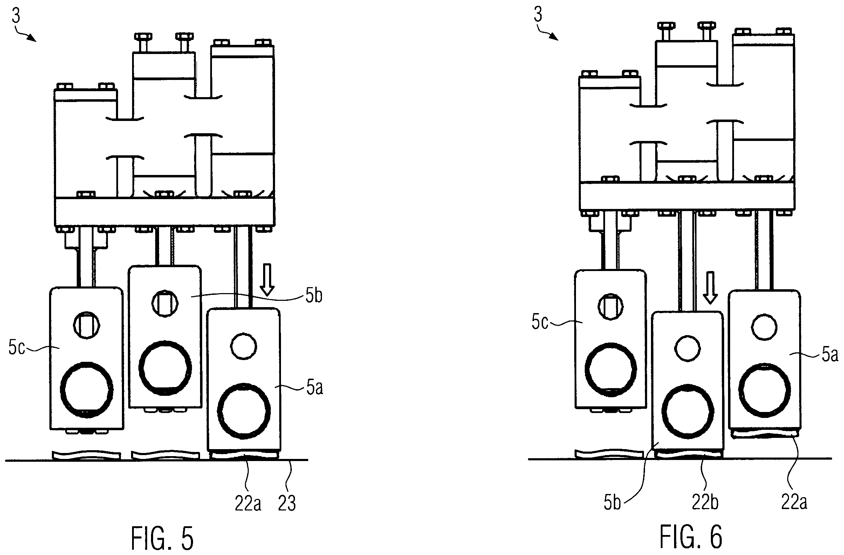

Anhand der folgenden Figuren wird die Funktionsweise des Mehrfachsauggreifers 3 näher erläutert. Figur 5 zeigt den Mehrfachsauggreifer 3 mit einem ersten 5a, zweiten 5b und dritten Sauggreifer 5c, wobei der erste Sauggreifer 5a in die Greifstellung positioniert wurde und der Mehrfachsauggreifer 3 sich in einer Stellung befindet, in der ein erstes Produkt 22a, das sich auf einer Zuführvorrichtung 23 befindet, von ihm erfasst wird. Der zweite 5b und dritte Sauggreifer 5c befinden sich in der Ruhestellung, um den Greifvorgang des ersten Saugreifers 5a nicht zu behindern.

Zum Aufnehmen eines zweiten Produkts 22b mittels des zweiten Sauggreifers 5b, wie in Figur 6 gezeigt, ist auch der zweite Sauggreifer 5b in seiner ausgefahrenen unteren Greifstellung, wobei diese Greifstellung gegenüber der Greifstellung des ersten Sauggreifers 5b derart in Richtung Produktaufnahme nach unten versetzt ist, so dass sowohl der erste Sauggreifer 5a mit seinem aufgenommenen Produkt 22a als auch der dritte Sauggreifer 5c den Greifvorgang des zweiten Produkts 22b nicht behindern.

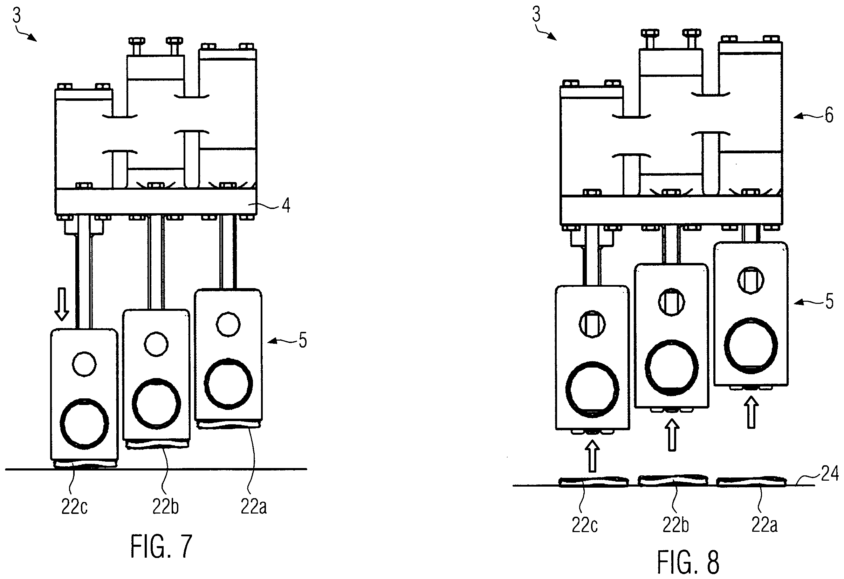

Figur 7 zeigt den Mehrfachsauggreifer 3 nach der Aufnahme aller drei Produkte 22a, 22b, 22c. Die drei Sauggreifer 5, im Einzelnen die Sauggreifer 5a, 5b, 5c, nehmen in dieser Greifstellung eine Treppenstellung ein, wobei die Sauggreifer 5 jeweils einen unterschiedlichen Abstand zur Greiferplatte 4 aufweisen.

Figur 8 zeigt den Mehrfachsauggreifer 3 nach dem Ablegen oder Abwerfen der Produkte 22a, 22b, 22c auf eine Transportvorrichtung 24. In dieser Phase befinden sich die Sauggreifer 5 wiederum in einer Treppenstellung zueinander und jeweils in der Ruhestellung. In dem gezeigten Ausführungsbeispiel ist dies über drei unterschiedliche Lagen der Pneumatikzylinder 6 zur Greiferplatte 4 ausgeführt. Denkbar sind auch unterschiedliche Hublängen der Pneumatikzylinder 6 oder verstellbare Anschläge.

## Patentansprüche

1. Mehrfachsauggreifer (3) mit einer Greiferplatte (4) und wenigstens zwei Sauggreifern (5), wobei die Sauggreifer (5) jeweils ein Gehäuse (11) umfassen und mittels eines Pneumatikzylinders (6) relativ zueinander und zur Greiferplatte (4) bewegbar sind, wobei für jeden Sauggreifer (5a, 5b, 5c) wenigstens eine Führungsstange (7) an der Greiferplatte (4) vorgesehen ist, über die der jeweilige Sauggreifer (5a, 5b, 5c) geführt ist, wobei jeder Sauggreifer (5) an einer zum Aufnehmen eines Produktes (22) vorgesehenen Ansaugseite (A) eine Vielzahl von Öffnungen (19) aufweist, **dadurch gekennzeichnet, dass** die Sauggreifer (5) jeweils einen Sauganschluss (9) aufweisen, der mittelbar mit einem Unterdruckerzeuger (13) verbunden ist, und dass die Sauggreifer (5) jeweils einen Sperrschieber (16) umfassen, wobei der Sperrschieber (16) derart mit der Führungsstange (7) verbunden ist, dass eine Bewegung des Saugreifers (6) gegenüber der Greiferplatte (4) zu einer Veränderung einer Öffnungsfläche (18) des Sauganschlusses (9) führt.

2. Mehrfachsauggreifer nach Anspruch 1, **dadurch gekennzeichnet, dass** an einer Ansaugseite (A) des Gehäuses (11) eine Wechselplatte (14) vorgesehen ist.

3. Mehrfachsauggreifer nach Anspruch 2, **dadurch gekennzeichnet, dass** ein Abschnitt der Führungsstange (7) durch die Wechselplatte (14) hindurch bewegbar ist.

4. Mehrfachsauggreifer nach einem der Ansprüche 2 oder 3, **dadurch gekennzeichnet, dass** die Wechselplatte (14) werkzeuglos am Gehäuse (11) montierbar und demontierbar ist.

5. Mehrfachsauggreifer nach Anspruch 4, **dadurch gekennzeichnet, dass** die Wechselplatte (14) mittels Führungsnuten (11a) in einem Gehäuse (11) des Saugreifers (6) verschiebbar ist.

6. Mehrfachsauggreifer nach einem der vorigen Ansprüche, **dadurch gekennzeichnet, dass** wenigstens ein Abdrückelement (21) zum Abdrücken eines Produktes (22) vom Sauggreifer (5) weg vorgesehen ist.

7. Mehrfachsauggreifer nach Anspruch 6, **dadurch gekennzeichnet, dass** das wenigstens eine Abdrückelement (21) am Sperrschieber (16) angeordnet ist.

8. Mehrfachsauggreifer nach einem der vorigen Ansprüche, **dadurch gekennzeichnet, dass** die Öffnungsfläche (18) mittels des Sperrschiebers (16) in dessen geschlossener Stellung teilweise abgedeckt ist, wobei vorzugsweise mehr als 80% der Öffnungsfläche (18) bedeckt ist.

9. Mehrfachsauggreifer nach einem der vorigen Ansprüche, **dadurch gekennzeichnet, dass** der Sauggreifer (5) eine Leckagebohrung (10) aufweist.

10. Mehrfachsauggreifer nach einem der vorigen Ansprüche, **dadurch gekennzeichnet, dass** die Sauggreifer (5) einen gegenüber der Greiferplatte (4) jeweils in ihrer Greifstellung und/oder Ruhestellung unterschiedlichen Abstand, vorzugsweise einen treppenförmigen Abstand, aufweisen.

11. Mehrfachsauggreifer nach einem der vorigen Ansprüche, **dadurch gekennzeichnet, dass** drei Saugreifer (5) vorgesehen sind.

12. Verfahren zum Betrieb eines Mehrfachsauggreifers (3) nach einem der Ansprüche 1 bis 11, **dadurch gekennzeichnet, dass** ein Sperrschieber (16) jeweils eines Sauggreifers (5) eine Öffnungsfläche (18) eines Sauganschlusses (9) des Sauggreifers (5) bei der Bewegung des Sauggreifers (5) verändert.

13. Verfahren nach Anspruch 12, **dadurch gekennzeichnet, dass** jeder Sauggreifer (5) ein Gehäuse (11) mit einer an einer Ansaugseite (A) vorgesehenen Wechselplatte (14) mit Öffnungen (19) aufweist, die insbesondere zu Reinigungszwecken werkzeuglos aus dem Gehäuse (11) herausgeschoben wird.

14. Verfahren nach Anspruch 13, **dadurch gekennzeichnet, dass** ein Produkt (22) mittels wenigstens eines Abdrückelements (21) und/oder wenigstens einer Führungsstange (7) des Sauggreifers (6) zum Ablegen des Produkts (22) von der Wechselplatte (14) weggedrückt wird, während das Gehäuse (11) an die Greiferplatte (4) heranbewegt wird.

15. Verfahren nach einem der Ansprüche 12 bis 14, **dadurch gekennzeichnet, dass** der Sperrschieber (16) fest mit einer Führungsstange (7) des jeweiligen Sauggreifers (5) verbunden ist und seine Position relativ zur Führungsstange (7) beibehält, während sich der Sauggreifer (5) relativ zur Greiferplatte (4) bewegt.

## Claims

1. A multiple suction gripper (3) with a gripper plate (4) and at least two suction grippers (5), wherein the suction grippers (5) each comprise a housing (11) and are movable by means of a pneumatic cylinder (6) relative to each other and to the gripper plate (4),
wherein at least one guide rod (7) is provided on the gripper plate (4) for each suction gripper (5a, 5b, 5c), via which guide rod the respective suction gripper (5a, 5b, 5c) is guided,
wherein each suction gripper (5) has a plurality of openings (19) on a suction side (A) provided for receiving a product (22), **characterised in that** the suction grippers (5) each have a suction connection (9), which is indirectly connected to a vacuum generator (13), and **in that** the suction grippers (5) each comprise a gate valve (16),
wherein the gate valve (16) is so connected to the guide rod (7) that a movement of the suction gripper (6) relative to the gripper plate (4) leads to a change in an opening surface (18) of the suction connection (9).

2. A multiple suction gripper according to claim 1, **characterised in that** a quick release plate (14) is provided on a suction side (A) of the housing (11).

3. A multiple suction gripper according to claim 2, **characterised in that** a portion of the guide rod (7) can run through the quick release plate (14).

4. A multiple suction gripper according to one of claims 2 or 3, **characterised in that** the quick release plate (14) can be mounted (and dismounted) without tools on the housing (11).

5. A multiple suction gripper according to claim 4, **characterised in that** the quick release playe (14) can be moved by means of guide grooves (11a) in a housing (11) of the suction gripper (6).

6. A multiple suction gripper according to one of the preceding claims, **characterised in that** at least one push-off element (21) is provided for pushing a product (22) away from the suction gripper (5).

7. A multiple suction gripper according to claim 6, **characterised in that** said at least one push-off element (21) is arranged on the gate valve (16).

8. A multiple suction gripper according to any one of the preceding claims, **characterised in that** the opening surface (18) is partially covered in its closed position by means of the gate valve (16), wherein preferably more than 80% of the opening area (18) is covered.

9. A multiple suction gripper according to one of the preceding claims, **characterised in that** the suction gripper (5) has a leakage bore (10).

10. A multiple suction gripper according to one of the preceding claims, **characterised in that** the suction grippers (5) are at a distance, preferrably show a stepped spacing, which is different with respect to the gripping position and/or the rest position.

11. A multiple suction gripper according to one of the preceding claims, **characterised in that** three suction grippers (5) are provided.

12. A method for operating a multiple suction gripper (3) according to one of claims 1 to 11, **characterised in that** a gate valve (16) for each case suction gripper (5) changes an opening surface (18) of a suction connection (9) of the suction gripper (5) during movement of the suction gripper (5).

13. A method according to claim 12, **characterised in that** each suction gripper (5) has a housing (11) with a suction plate (A) provided on a quick release plate (14) with openings (19), which plate is extracted from the housing (11) in particular for cleaning purposes without tools.

14. A method according to claim 13, **characterised in that** a product (22) is pushed away by means of at least one push-off element (21) and/or at least one guide rod (7) of the suction gripper (6) for storing the product (22) of the quick release plate (14), while the housing (11) is moved closer to the gripper plate (4).

15. Method according to one of claims 12 to 14, **characterised in that** the gate valve (16) is fixedly connected to a guide rod (7) of the respective suction gripper (5) and maintains its position relative to the guide rod (7) while the suction gripper (5) moves relative to the gripper plate (4).

## Revendications

1. Pont à ventouses multiples (3) avec une plaque de préhension (4) et au moins deux ponts à ventouses (5), les ponts à ventouses (5) comprenant chacune un logement (11) et pouvant se déplacer au moyen d'un cylindre pneumatique (6) l'un par rapport à l'autre et à la plaque de préhension (4),
dans lequel au moins une tige de guidage (7) est prévue sur la plaque de préhension (4) pour chaque pont à ventouses (5a, 5b, 5c), par l'intermédiaire de laquelle tige de guidage le pont à ventouses respectif (5a, 5b, 5c) est guidé,
dans lequel chaque pont à ventouses (5) présente une pluralité d'ouvertures (19) sur un côté à ventouses (A) prévu pour recevoir un produit (22), **caractérisé en ce que** les ponts à ventouses (5) présentent chacun un raccord à ventouses (9) indirectement relié à un générateur de vide (13) et **en ce que** les ponts à ventouses (5) comprennent chacun une vanne à tiroir (16),
dans lequel la vanne à tiroir (16) est ainsi reliée à la tige de guidage (7) **en ce qu'**un mouvement du pont à ventouses (6) par rapport à la plaque de préhension (4) entraîne une modification de la surface d'ouverture (18) du raccord à ventouses (9).

2. Pont à ventouses multiples selon la revendication 1, **caractérisé en ce qu'**une plaque à libération rapide (14) est prévue du côté à ventouses (A) du boîtier (11).

3. Pont à ventouses multiples selon la revendication 2, **caractérisé en ce qu'**une partie de la tige de guidage (7) peut traverser la plaque à libération rapide (14).

4. Pont à ventouses multiples selon l'une des revendications 2 ou 3, **caractérisé en ce que** la plaque à libération rapide (14) peut être montée (et démontée) sans outil sur le boîtier (11).

5. Pont à ventouses multiples selon la revendication 4, **caractérisé en ce que** la plaque à libération rapide (14) peut être déplacée au moyen de rainures de guidage (11a) dans un boîtier (11) du pont à ventouses (6).

6. Pont à ventouses multiples selon l'une des revendications précédentes, **caractérisé en ce qu'**au moins un élément de poussée (21) est prévu pour repousser un produit (22) par rapport au pont à ventouses (5).

7. Pont à ventouses multiples selon la revendication 6, **caractérisé en ce que** ledit au moins un élément de poussée (21) est agencé sur la vanne à tiroir (16).

8. Pont à ventouses multiples selon l'une quelconque des revendications précédentes, **caractérisé en ce que** la surface d'ouverture (18) est partiellement recouverte dans sa position fermée au moyen de la vanne à tiroir (16), dans laquelle de préférence plus de 80% de la surface d'ouverture (18) est recouverte.

9. Pont à ventouses multiples selon l'une des revendications précédentes, **caractérisé en ce que** le pont à ventouses (5) présente un alésage de fuite (10).

10. Pont à ventouses multiples selon l'une des revendications précédentes, **caractérisé en ce que** les ponts à ventouses (5) sont espacés l'un de l'autres et présentent de préférence un espacement gradué de la position de préhension et/ ou de la position de repos.

11. Pont à ventouses multiples selon l'une des revendications précédentes, **caractérisé en ce que** trois pont à ventouses (5) sont prévus.

12. Procédé d'exploitation d'un pont à ventouses multiples (3) selon l'une des revendications 1 à 11, **caractérisé en ce qu'**une vanne à tiroir (16) pour chaque pont à ventouses (5) modifie la surface d'ouverture (18) d'un raccord à ventouses (9) du pont à ventouses (5) pendant le mouvement du pont à ventouses (5).

13. Procédé selon la revendication 12, **caractérisé en ce que** chaque pont à ventouses (5) présente un boîtier (11) avec une plaque de préhension (A) prévue sur une plaque à libération rapide (14) avec des ouvertures (19), laquelle plaque est extraite du boîtier (11) en particulier pour effectuer un nettoyage sans outils.

14. Procédé selon la revendication 13, **caractérisé en ce qu'**un produit (22) est repoussé au moyen d'au moins un élément de poussée (21) et/ou d'au moins une tige de guidage (7) du pont à ventouses (6) pour stocker le produit (22) de la plaque à libération (14), tandis que le boîtier (11) est rapproché de la plaque de préhension (4).

15. Procédé selon l'une des revendications 12 à 14, **caractérisé en ce que** la vanne à tiroir (16) est reliée de manière fixe à une tige de guidage (7) du pont à ventouses multiples (5) et maintient sa position par rapport à la tige de guidage (7) tandis que le pont à ventouses (5) se déplace par rapport à la plaque de préhension (4).
